# EUROPEAN PATENT APPLICATION

(11) **EP 4 685 759 A1**
(43) Date of publication of application: **28.01.2026**
(21) Application number: 25175921.3
(22) Date of filing: 13.05.2025
(51) Int. Cl.: G06V 40/16, G06V 10/145, G06V 40/40

(54) **METHOD, SYSTEM AND COMPUTER PROGRAM PRODUCT FOR PROVIDING DEEP FAKE DETECTION AND PREVENTION IN A VIDEO CONFERENCE**

(30) Priority: 26.07.2024 NO 20240790
(71) Applicant: Pexip AS, 0283 Oslo (NO)
(72) Inventor: HVIDSTEN, Knut Inge, 1164 Oslo (NO)
(74) Representative: Acapo Onsagers AS

(57) **Abstract**

A system and method for continuous biometric verification during video calls to prevent the injection of deepfake media streams. The method involves actively illuminating the user's face with near-infrared light and projecting a pseudo-random dot pattern onto the face using a structured light projector. An infrared camera or LiDAR/ToF sensor captures the reflected pattern to create a depth map, which is compared with stored biometric data for continuous identity verification. The system ensures secure transmission of genuine real-time media streams by continuously matching the depth map and video feed with the biometric database, detecting and blocking any discrepancies. Key components include a dot pattern generator, structured light projector, infrared camera, LiDAR/ToF sensor, triangulation algorithm, biometric database, and face identification algorithm. The invention enhances security in digital communication platforms by providing robust protection against fraudulent activities during video calls.

## Description

### Technical field

The present invention relates to the field of biometric authentication, specifically to the development and implementation of systems and methods for utilizing biometric data to continuously verify the identity of users participating in video calls (or other applications of live or offline electronic audio-video reproduction of users). More particularly, it addresses the prevention of fraudulent activities by ensuring that only genuine, real-time media streams from live individuals are transmitted during video calls, thereby thwarting attempts to inject fake or pre-recorded media streams. This invention enhances security and integrity in digital communication platforms by leveraging advanced biometric technologies

### Background

The rapid advancement of AI-based tools for content generation has made it increasingly easy to create fake live (in real-time) audio and video streams of actual people. These AI-generated deepfakes can be used in video calls and are often perceived as indistinguishable from real individuals. The implications of such technology are profound, as evidenced by substantial financial losses already incurred by private companies due to these deceptive practices. The risk extends beyond the corporate sector, posing significant threats to governments, law enforcement agencies, healthcare providers, and other critical sectors.

Current systems for user verification typically confirm a user's identity at the time of login by checking passwords and biometric data. However, these systems often fail to continuously verify that the media being transmitted during a video call is actually generated by the authenticated user. This gap in security allows for scenarios where an authenticated user could log in, and an attacker could subsequently inject fake media streams.

Deepfake media can be injected into video calls at two critical network locations. First, at any "man-in-the-middle" components, which processes and transcodes media streams for each participant. Despite standard security measures like user authentication and media encryption, these intermediary components present a vulnerability where fake media can be introduced. Second, at endpoints, such as video terminals, computers, smartphones or cameras controlled by the end-user. These devices can be tampered with before a call, allowing attackers to either inject fake media via remote software vulnerabilities, or to physically inject fake media through devices added to a camera lens and microphone diaphragm. Some of these attacks will require physical tampering with the device electronics themselves or adding external devices to feed them with sound and visuals that are fake, while others could be carried out from anywhere. Even if the call itself is encrypted, it is ineffective if the transmitted audio and video are not genuinely from the authenticated user.

These following embodiments according to the present application address these critical vulnerabilities by providing continuous biometric verification during video calls, ensuring that only genuine, real-time media streams from authenticated, live individuals are transmitted.

### Summary

In view of the above, an object according to embodiments of the present application is to overcome or at least mitigate drawbacks of prior art video conferencing systems.

In a first aspect in a method for continuous biometric verification and presence detection of a live person in a video feed during video calls, the following steps are included:
actively irradiating a scene in front of an irradiation sensor using a structured irradiation projector,
generating a pseudo-random, time-variant dot pattern as a challenge,
modifying the structured light projected by the structured light source according to the pseudo-random, time-variant dot pattern;
continuously projecting the dot pattern onto a user's face using the modified structured light,
capturing a reflected pattern from the user's face using an irradiation sensor to produce a depth map of the user's face,
verifying the identity of the user by comparing the depth map with stored biometric data,
rejecting the biometric verification if the comparison with the depth map does not match,
ensuring the transmission of genuine real-time media streams from authenticated users during the video call by revoking the identity of the user if the depth map does not match, or if a challenge is not responded.

A system implementing the above mentioned steps are also provided.

### Brief description of the drawings

Figure 1 illustrates the initial login process with two-factor authentication and biometric verification using a structured light projector and regular video camera.
Figure 2 illustrates an attempt to attach by inserting a deepfake.
Figure 3 shows a continuous biometric verification process during a video call using a dot pattern generator and infrared sensors.
Figure 4 illustrates a server based continuous biometric authentication according to an embodiment of the invention.
Figure 5 illustrates a server based continuous biometric authentication according to another embodiment of the invention.
Figure 6 illustrates an integration of system components including structured light projector, IR camera, and triangulation algorithm.
Figure 7 illustrates an integration of system components including an IR LiDAR source/detector.
Figure 8 illustrates a scenario where a user is leaving during a call.
Figure 9 illustrates a scenario where an intruder attempts to inject deepfake media, which is detected and blocked by the system.
Figure 10 illustrates a scenario where an intruder attempts to inject deepfake media, which is detected and blocked by the system

### Detailed description

According to embodiments of the present application as disclosed herein, the above-mentioned disadvantages of solutions according to prior art are eliminated or at least mitigated.

The embodiments introduce a system for continuous authentication of a user's identity throughout the duration of a video call. This system prevents intruders from injecting deepfake media streams by ensuring real-time verification. According to the present application a method and system are provided which enable a video call participant to receive two separate secure data feeds from another user.

These two separate secure data feeds include the user's video and audio feed which can be the standard video call data stream. In addition, a feed of continuous meta information is provided, which confirms that the person in the user's video feed is consistent with the authenticated user's identity.

According to several embodiments of the present application, the method and system consist of several key components and algorithms, each serving a specific function in the continuous authentication process.

The components may include a structured irradiation projector actively irradiating a scene in front of an irradiation sensor, which is producing a depth map of the user's face, and wherein the depth map is compared with stored biometric data to verify the identity of the user continuously and then ensuring the transmission of genuine real-time media streams from authenticated users during the video call.

As an example, the scene in front of the irradiation sensor is actively illuminated using near-infrared light which is invisible to humans. Stray light in-doors tends to be moderate thereby reducing the required illumination power.

A Dot Pattern Generator creates a pseudo-random (unpredictable) and time-variant dot pattern that is used as a challenge in a challenge-response mechanism. This pattern may be transferred to a structured light projector to produce a disparity map that corresponds to depth. The projector and the sensor are spatially offset, thus over a range of distances, spatial distance is translated into a spatial offset in the image sensor plane.

A scanning source/detector mechanism for LiDAR or Time-of-flight (ToF) camera provides a mechanism to directly estimate the distance from sensor to the user's face, tracking the scene in a pseudo-random (brownian walk) manner.

A Structured Light Projector projects a known pattern (such as dots, grids or horizontal bars) onto the user's face. This pattern can be projected using infrared (IR) light. A disparity map of the projected pattern on the face allows the vision system to estimate depth information.

A Regular Video Camera captures the visible light imagery, providing the normal video feed for the call.

An Infrared Camera, LiDAR or ToF Sensor captures the reflections of the IR or laser light on the user's face. This forms the response in the above-mentioned challenge-response mechanism.

A Triangulation Algorithm processes the output from the IR camera to create a depth map of the user's face.

The depth map from a scanning LiDAR/ToF sensor is arranged spatially according to the scanning pattern so as to build a depth map of the face as a function of time.

Note that the depth maps discussed above is not limited to be provided only by light. Embodiments herein also include providing face topology by means of other type of signals like radar and acoustic signals.

A Biometric Database contains reference biometric data in the form of depth maps for the users whose identities need to be verified.

A Face Identification Algorithm compares data from the regular video camera and the depth map with the data in the biometric database. If there is a match, the identity flag of the algorithm is set to TRUE.

According to certain embodiments of the present application, the method and system operate on a continuous flow of challenge-response events.

The challenge creation may include that the Dot Pattern Generator creates a randomized pattern, which modifies the structured light projected by the structured light source.

The Structured Light Projector further projects the pattern onto the user's face for a challenge projection. For the purpose of capturing a response, the IR camera or LiDAR sensor captures the reflected light from the user's face. The triangulation algorithm processes the captured data to create a depth map.

A live person verification may be provided by first verifying that there is a live person in front of the system based on the challenge-response mechanism.

The depth map may then be compared with the imagery from the regular video camera. Both data streams are then compared with the biometric data stored in the database to confirm the user's identity.

According to certain embodiments of the present application, the above indicated process ensures that there is a live person in front of the system.

This live person will then with a high probability be the same as the one whose image is being transmitted on the video call. The person's identity is confirmed through biometric comparison with stored data.

According to an alternative embodiment of the present application, the method and system can be further enhanced or modified by different sources of structured light: While incoherent IR projection paired with conventional (IR-filtered) camera technology is well-established and cost-effective, the minimum challenge-response loop latency is on the order of the framerate of the camera system. LiDAR/ToF technology on the other hand, presents a loop latency fundamentally limited by the speed of light, typically at distances of a few meters.

According to another alternative embodiment of the present application, moving the randomized pattern generator and face identification components to an external server could reduce the risk of tampering with the user's local setup via software, hardware or remote network. This approach can enhance security by minimizing the vulnerabilities associated with local device manipulation, by having centralized security-critical infrastructure.

By integrating these components and processes, the invention ensures continuous and robust user authentication, effectively preventing the injection of deepfake media streams and enhancing the security of video calls across various sectors.

The present invention will in the following be described referring to the drawings.

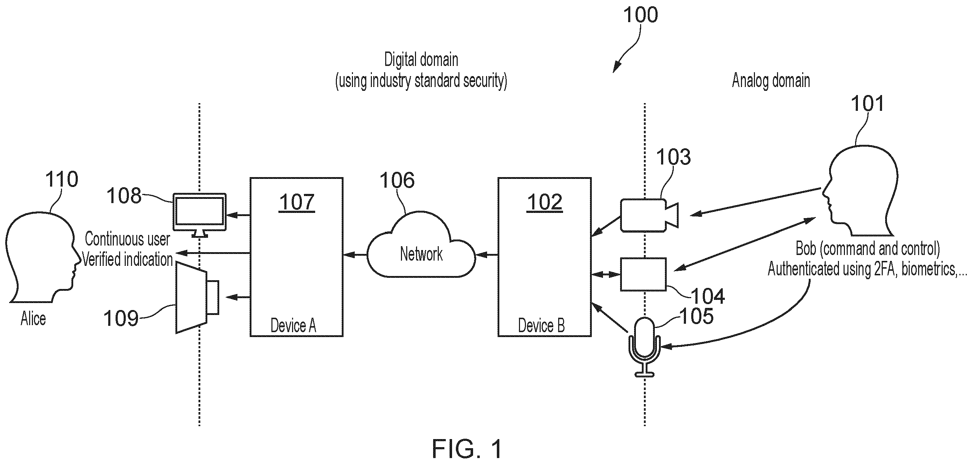

Figure 1 depicts a security framework for continuous authentication during video calls, designed to prevent the injection of deepfake media streams. In the following, an example embodiment according to the present application is discussed. For simplicity, biometric authentication is considered only in one direction. It is understood that the same principles and solutions could be applied to the other direction as well for a two-way live authenticated video meeting.

Bob 101 represents the initiating user at Endpoint B 102, who wants to securely communicate via a video call. Bob's setup includes a regular video camera 103 and a structured light projector 104 or other biometric sensors for continuous authentication. Endpoint B may also include a microphone 105.

Endpoint A 107 is securely linked to the network 106, ensuring that data received from Bob's device 102 is encrypted and protected. A secure link is established from Bob's device 102 to Alice's device 107, mitigating man-in-the-middle attacks. Alice 110 represents the receiving user at Endpoint A, 107. Endpoint A 107 includes at least one of a video display 108 and a loudspeaker 109.

The network 106 securely transmits the encrypted data between Endpoint B 102 and Endpoint A 107. This network link ensures that the data cannot be intercepted or tampered with during transmission.

Endpoint B 102 is connected to the network via a secure link and is designed to send the data stream to Endpoint A 107. Bob 101 is the sending user at Endpoint B 102. He represents the sending participant who is verified using two-factor authentication (2FA) and biometric data. Bob's setup includes mechanisms to continuously verify that the media being received corresponds to a live person whose identity is authenticated.

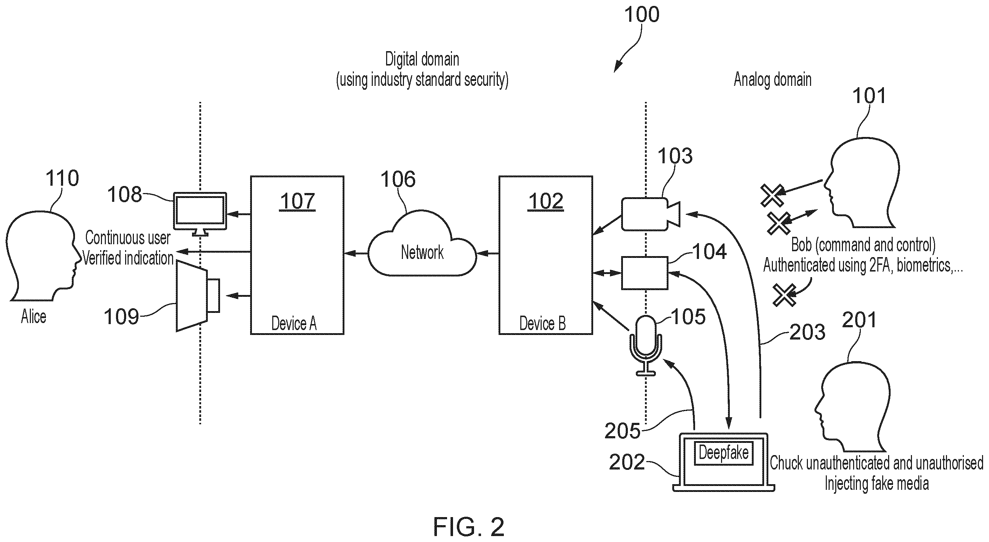

As indicated in figure 2, a deepfake injection attempt is made by an intruder (Chuck) to inject fake media 203, 205 into the video call. Chuck 201 tries to replace the real-time media stream with a deepfake 202 of Bob.

By means of a challenge-response Mechanism, the system continuously projects structured light using wavelengths in the near-IR range onto the user's face and captures the response with IR, LiDAR or ToF sensors. The depth map created from this response is used to verify the presence of a live person. This provides a secure verification process.

A regular video feed and depth map data are continuously compared with stored biometric data, and the verification process ensures that the person on the screen matches the authenticated user and that the media is not tampered with, so as to provide a continuous authentication.

A solved outcome would indicate a successful implementation of the system, where continuous authentication verifies the user's identity, and ensures that the real-time video feed is genuine, confirming Bob's 101 identity at all times during the call, or a positive identification every N seconds, to be chosen by the implementer or an administrator. As Alice 110 is watching the video feed and listening to the audio feed, injecting fake audio only would break apparent lip-sync and be easily detected manually.

A failed outcome would show that attempts to inject deepfake media by Chuck 201 are detected and blocked. The system recognizes discrepancies between the real-time data and the biometric data, preventing unauthorized access.

In summary, the illustration of Figure 1 demonstrates a robust system 100 for securing video calls through continuous biometric authentication. It ensures that the media stream remains genuine by constantly verifying the user's identity, thus preventing the injection of deepfake media streams. The system effectively adds to existing systems for electronic authorization by also authorizing physical imagery, thus addressing vulnerabilities at multiple points, including endpoints and network links, providing a comprehensive solution for secure digital communication.

Figure 1 illustrates the initial login process where the user 101 at Endpoint B 102 undergoes two-factor authentication (2FA) and biometric verification using a structured light projector 104 and a regular video camera 103. The secure link establishment to Endpoint A 107 is also depicted, ensuring encrypted transmission of the authenticated media stream. Figure 2 schematically illustrates an an attempt to attack , where Chuck 201 tries to replace the real-time media stream with a deepfake 202 of Bob by inserting deepfake audio 205 and deepfake video 203 of Bob trough the microphone 105 and video camera 103.

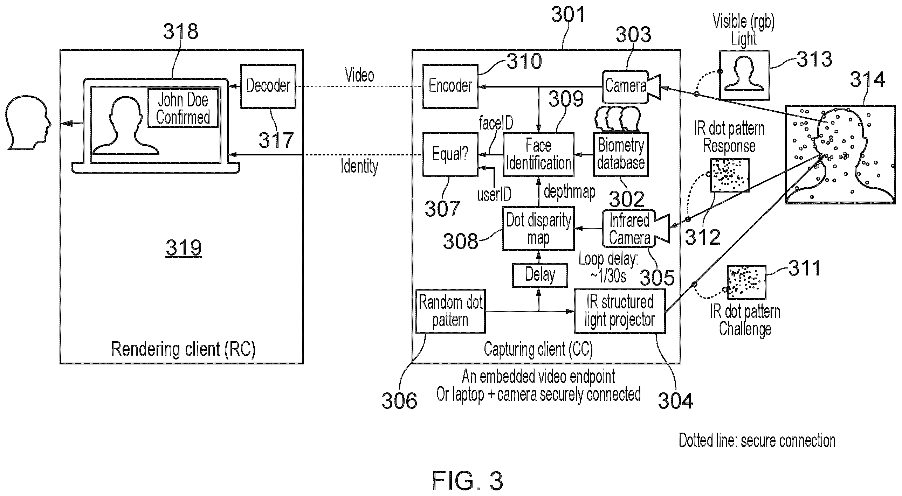

Figure 3 shows the continuous biometric verification process during a video call. A dot pattern generator 304 creates a pseudo-random pattern 311 projected onto the user's face, which is captured by an infrared (IR) 305 camera or LiDAR/ToF sensor to produce a depth map. This depth map is compared with stored biometric data 302 for ongoing identity verification. Figure 3 schematically illustrates a capturing client 301 performing continuous biometric verification. The capturing client comprises a visible light camera 303, a structured irradiation projector 304, e.g. an near IR light, for actively irradiating a scene in front of an irradiation sensor 305, e.g. an IR camera, a dot pattern generator 306 configured to create a pseudo-random, time-variant dot pattern as a challenge 311. The irradiation sensor 305 is adapted to capturing a reflected pattern, a dot pattern response 312, from a user's face and creating a depth map of the user's face. Image 314 illustrates a combined image of a user comprising visible light 313 and the dot pattern response 312. The depth map may be a disparity map 308 that corresponds to depth based on a spatial offset between the projector 304 and the sensor 305. The capturing client 301 comprises a biometric database 302, and a face identification algorithm 309 for comparing the depth map with stored biometric data in the biometric database 302 to verify the identity of the user. The capturing client 301 rejects the biometric verification if the comparison with the depth map does not match and ensures the transmission of genuine real-time media streams 315 from authenticated users during the video call by revoking the identity 316 of the user if the depth map does not match, or if the challenge 311 is not responded. The regular video feed 313 of the user may also be used to compare it with the depth map for consistency with the stored biometric data.

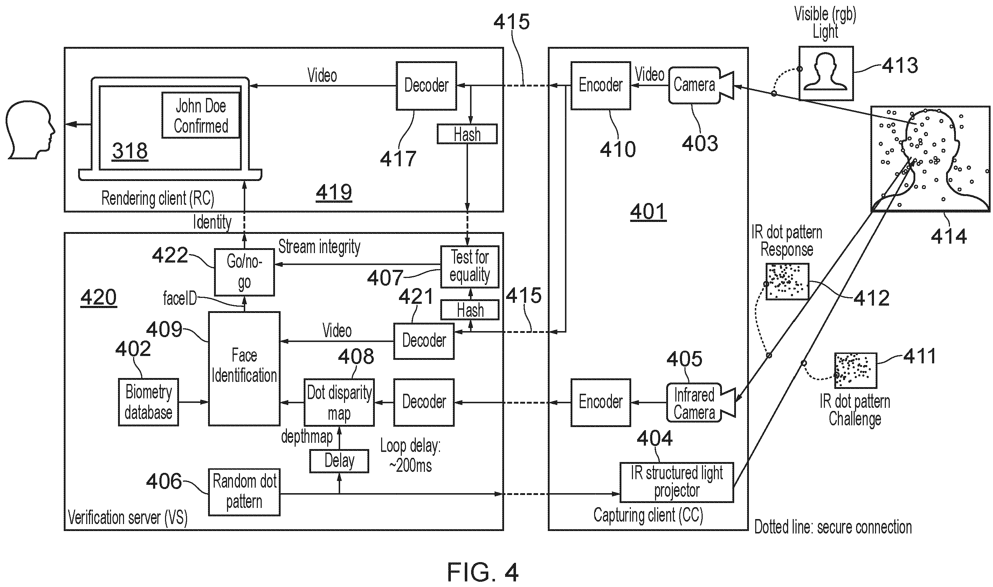

Figure 4 an server based continuous biometric authentication.. Figure 4 schematically illustrates a similar system as Figure 3, where the pattern generator 306 and face identification algorithms 309 is moved to a verification server 420. The capturing client 401 comprises a visible light camera 403, a structured irradiation projector 404, e.g. an near IR light, for actively irradiating a scene in front of an irradiation sensor 405, e.g. an IR camera. The dot pattern generator 406 configured to create a pseudo-random, time-variant dot pattern as a challenge 411 may be part of the verification server 420 and transmit the dot pattern to the structured irradiation projector 404 of the capturing client 420. The irradiation sensor 405 is adapted to capturing a reflected pattern, a dot pattern response 412, from a user's face and creating a depth map of the user's face. Image 414 illustrates a combined image of a user comprising visible light 413 and the dot pattern response 412. The depth map may be a disparity map 408 that corresponds to depth based on a spatial offset between the projector 404 and the sensor 405. The depth map may be transmitted securely from the capturing client 401 to the verification server 420. The verification server 420 comprises a biometric database 402, and a face identification algorithm 409 for comparing the depth map with stored biometric data in the biometric database 402 to verify the identity of the user. The verification server 420 rejects the biometric verification if the comparison with the depth map does not match and ensures the transmission of genuine real-time media streams 415 from authenticated users during the video call by revoking the identity of the user if the depth map does not match, or if the challenge 411 is not responded. The regular video feed 415 of the user may also be used to compare it with the depth map for consistency with the stored biometric data. The video feed 415 may be transmitted securely to the verification server 420 for comparison with the biometric data stored in the biometric database.

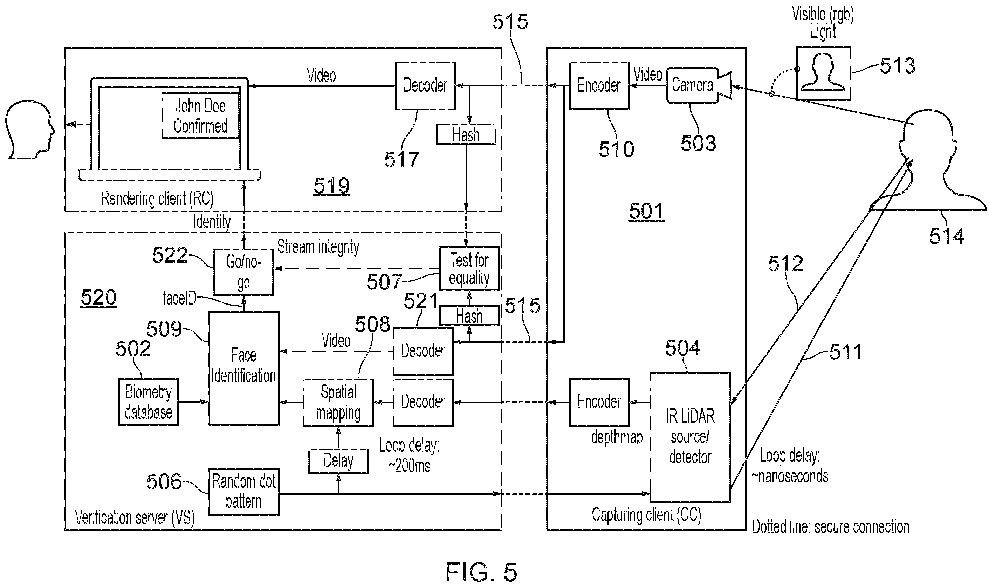

Figure 5 depicts a server based continuous biometric authentication system similar to the one illustrated in Figure 4. The capturing client 501 comprises an IR LiDAR source/detector 504 actively irradiating a scene in front of the IR LiDAR source/detector 504. The dot pattern generator 506 configured to create a pseudo-random, time-variant dot pattern as a challenge 511 may be part of the verification server 520 and transmit the dot pattern to the structured irradiation projector 504 of the capturing client 520. The IR LiDAR source/detector 504 is adapted to capturing a reflected pattern, a dot pattern response 512, from a user's face. The IR LiDAR source/detector 504. The depth map from a scanning LiDAR/ToF sensor is a partial mapping 508, i.e. arranged spatially according to the scanning pattern so as to build a depth map of the face as a function of time. The depth map may be transmitted securely from the capturing client 501 to the verification server 520. The verification server 520 comprises a biometric database 502, and a face identification algorithm 509 for comparing the depth map with stored biometric data in the biometric database 502 to verify the identity of the user. The verification server 520 rejects the biometric verification if the comparison with the depth map does not match and ensures the transmission of genuine real-time media streams 515 from authenticated users during the video call by revoking the identity of the user if the depth map does not match, or if the challenge 511 is not responded. The regular video feed 515 of the user may also be used to compare it with the depth map for consistency with the stored biometric data. The video feed 515 may be transmitted securely to the verification server 520 for comparison with the biometric data stored in the biometric database.

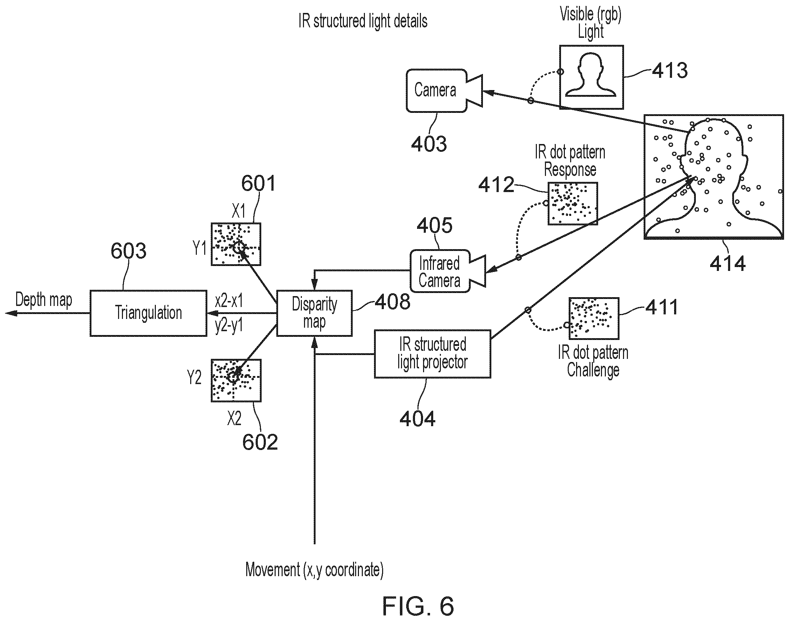

Figure 6 details the challenge-response mechanism used to detect deepfakes. The structured light projector 404 continuously projects patterns 411 onto the user's face, and the IR camera 405 captures the reflections. The disparity maps 408 generated are used to verify the presence of a live person and compare with the video feed for real-time authentication. A depth map may be a disparity map 408 that corresponds to depth based on triangulation 603 of a spatial offset 601, 602 between the projector 404 and the sensor/camera 405.

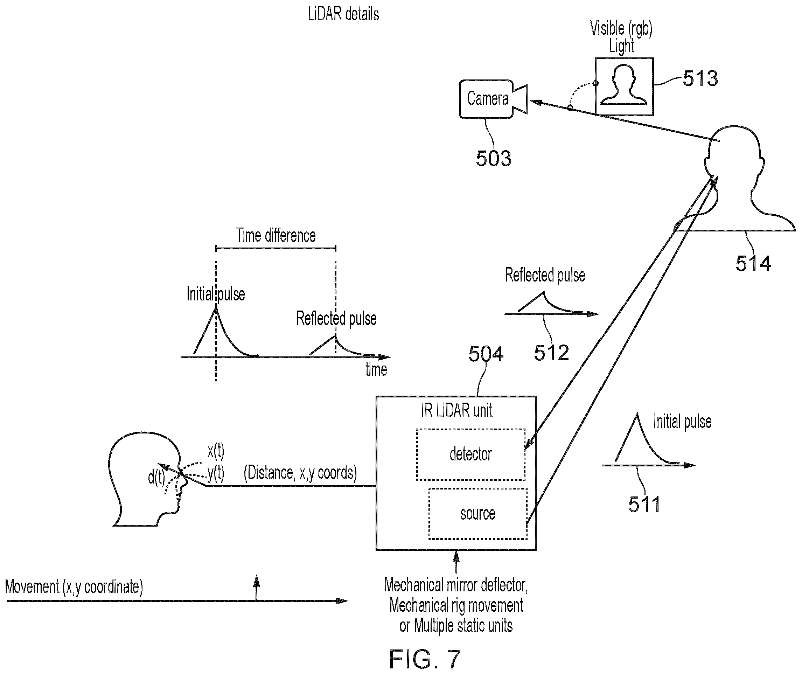

Figure 7 details the challenge-response mechanism used to detect deepfakes. The structured light projector 504 continuously projects patterns 511 onto the user's face, and the IR LiDAR/ToF sensor captures the reflections 512. The scanning source/detector mechanism for LiDAR or Time-of-flight (ToF) camera provides a mechanism to directly estimate the distance from sensor to the user's face, tracking the scene in a pseudo-random (Brownian walk) manner. The depth map from the scanning LiDAR/ToF sensor is arranged spatially according to the scanning pattern so as to build depth maps of the face as a function of time that are used to verify the presence of a live person and compare with the video feed for real-time authentication.

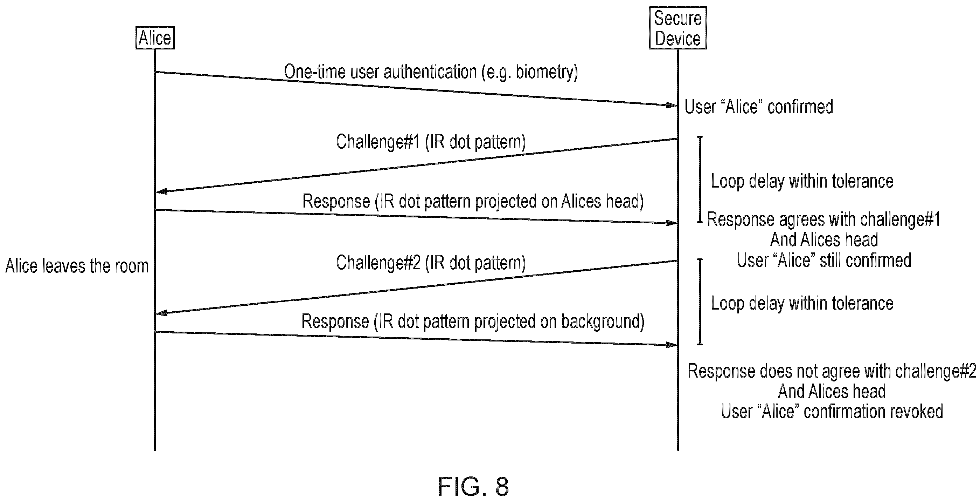

Figure 8 illustrates an example of a verification process where a user, Alice, is leaving the camera view. The depth map and video feed are continuously matched with the stored biometric data, ensuring that the media stream being transmitted is from a live, authenticated user, illustrated by challenge #1, but when Alice leaves the view, illustrated by challenge #2, the IR dot pattern is projected on a background, the response does not agree with the challenge, and user Alice confirmation is revoked.

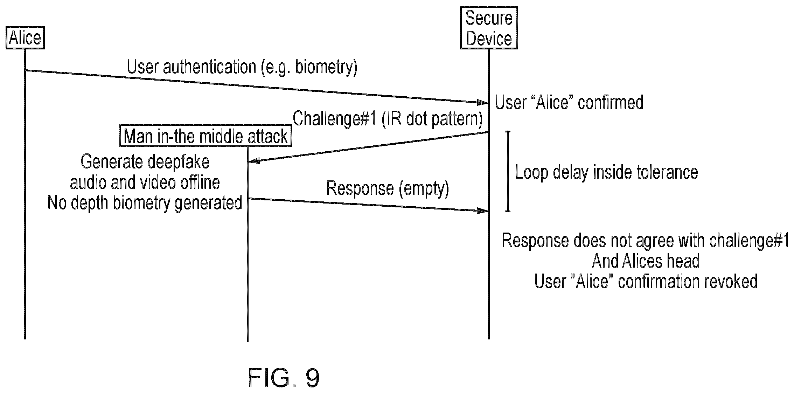

Figure 9 demonstrates a scenario where an intruder attempts to inject deepfake media into the video call. No depth geometry is generated. The system detects discrepancies between the real-time depth map and video feed with the biometric data, blocking the fake media and alerting the users to the security breach.

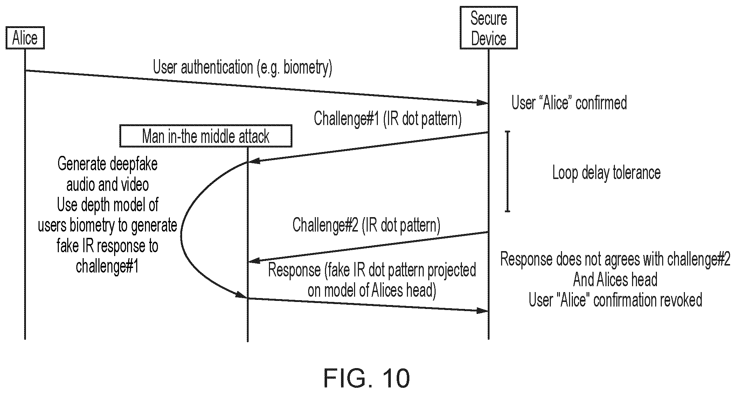

Figure 10 demonstrates a scenario where an intruder attempts to inject deepfake media into the video call. The deepfake includes a depth model of user biometry generating a fake IR response based on a first challenge, Challenge #1. The system detects that the intruder fails to generate a response in due time to a second challenge, Challenge #2. Since a response to the challenge is missing, the user confirmation is revoked.

These mechanisms according to the embodiments discussed herein represents a significant improvement over traditional systems where a call participant's identity is authenticated only at the time of logging in, and the confirmed identity is assumed throughout the call. Continuous authentication ensures security and integrity throughout the entire duration of the call.

## Claims

1. A method for continuous biometric verification and presence detection of a live person in a video feed during video calls, **characterized by** comprising:
actively irradiating a scene in front of an irradiation sensor using a structured irradiation projector;
generating a pseudo-random, time-variant dot pattern as a challenge;
modifying the structured light projected by the structured light source according to the pseudo-random, time-variant dot pattern;
continuously projecting the dot pattern onto a user's face using the modified structured light;
capturing a reflected pattern from the user's face using an irradiation sensor to produce a depth map of the user's face;
verifying the identity of the user by comparing the depth map with stored biometric data;
rejecting the biometric verification if the comparison with the depth map does not match;
ensuring the transmission of genuine real-time media streams from authenticated users during the video call by revoking the identity of the user if the depth map does not match, or if the challenge is not responded.

2. The method of claim 1, wherein actively irradiating a scene in front of the irradiation sensor using the structured irradiation projector comprising actively illuminating the scene in front of the irradiation sensor using near-infrared light, and capturing the reflected pattern using an infrared camera or a LIDAR/Tof irradiation sensor.

3. The method of claim 1, comprising creating a disparity map that corresponds to depth based on a spatial offset between the projector and the sensor.

4. The method of claim 2, comprising creating the depth map using a triangulation algorithm processing data from the infrared camera.

5. The method of claim 1, comprising capturing a regular video feed of the user and comparing it with the depth map for consistency with the stored biometric data.

6. The method of claim 1, comprising transmitting the depth map and the video feed securely to a remote server for comparison with biometric data stored in a biometric database.

7. The method of claim 1, comprising preventing injection of deepfake media by detecting and blocking any discrepancies between the depth map and the video feed.

8. The method of claim 7, comprising providing feedback to the user and the system administrator if an attempt to inject fake media is detected.

9. The method of claim 1, comprising moving critical components, such as a dot pattern generator or face identification algorithm, to an external server for enhancing security.

10. A system for continuous biometric verification and presence detection of a live person 101 in a video feed during video calls, **characterized by** comprising:
a structured irradiation projector 304, 404, 504 for actively irradiating a scene in front of an irradiation sensor 304, 404, 504 with a structured light source;
a dot pattern generator 306, 406, 506 configured to create a pseudo-random, time-variant dot pattern 311, 411, 511 as a challenge;
the irradiation sensor 304, 404, 504 being adapted to capturing a reflected pattern 312, 412, 512 from a user's face and creating a depth map 308, 408, 508 of the user's face;
a biometric database 302, 402, 502 containing stored biometric data for
comparison;
a face identification algorithm 309, 409, 509 for comparing the depth map 308, 408, 508 with the stored biometric data to verify the identity of the user 101;
the system being adapted to
modifying the structured light projected by the structured light source according to the pseudo-random, time-variant dot pattern;
continuously projecting the dot pattern onto a user's face using the modified structured light;
rejecting the biometric verification if the comparison with the depth map does not match; and
ensuring the transmission of genuine real-time media streams from authenticated users during the video call by revoking the identity of the user if the depth map does not match, or if the challenge is not responded.

11. The system of claim 10, wherein the structured irradiation projector is a near-infrared light for actively illuminating the scene in front of the irradiation sensor by using near-infrared light, and that the structured irradiation projector is a structured light projector and the irradiation sensor is an infrared camera or a LIDAR/Tof irradiation sensor.

12. The system of claim 10, comprising a mechanism for creating a disparity map that corresponds to depth based on a spatial offset between the projector and the sensor.

13. The system of claim 10, comprising a triangulation algorithm for processing the captured reflected pattern of a user's face by the irradiation sensor to create the depth map.

14. The system of claim 10, comprising a regular video camera for capturing visible light imagery of the user.

15. The system of claim 10, being adapted to transmitting the depth map and the video feed securely to a remote server for comparison with the biometric data stored in the biometric database.

16. The system of claim 10, being adapted to preventing the injection of deepfake media by detecting and blocking any discrepancies between the depth map and the video feed.

17. The system of claim 10, comprising a feedback mechanism to alert the user and system administrator if an attempt to inject fake media is detected.

18. The system of claim 10, comprising security enhancements by moving critical components like the pattern generator and face identification algorithms to an external server.
